Europäisches Patentamt

European Patent Office

Office européen des brevets

(11) Publication number: **0 144 563**
**B1**

(12) **EUROPEAN PATENT SPECIFICATION**

(45) Date of publication of patent specification: **09.12.87**

(51) Int. Cl.⁴: **B 60 R 1/06**

(21) Application number: **84110771.7**

(22) Date of filing: **10.09.84**

(54) Cleaning system, particularly for external rearview mirrors of motor vehicles.

(30) Priority: **12.09.83 IT 6793983**

(43) Date of publication of application:
**19.06.85 Bulletin 85/25**

(45) Publication of the grant of the patent:
**09.12.87 Bulletin 87/50**

(84) Designated Contracting States:
**AT BE CH DE FR GB IT LI LU NL SE**

(56) References cited:
**FR-A-2 511 317**
**LU-A- 33 726**
**US-A-3 447 187**

(73) Proprietor: **FIAT AUTO S.p.A.**
**Corso Giovanni Agnelli 200**
**I-10135 Torino (IT)**

(72) Inventor: **Di Giusto, Nevio**
**Via Guarini, 48**
**I-10078 Venaria Torino (IT)**

(74) Representative: **Bongiovanni, Guido et al**
**c/o Ingg. Carlo e Mario Torta Via Viotti 9**
**I-10121 Torino (IT)**

Courier Press, Leamington Spa, England.

## Description

This invention relates to a cleaning system for external rearview mirrors of motor vehicles as specified in the preamble of claim 1. The currently known cleaning devices for external rearview mirrors generally employ wiper blades of the type used for the windscreen, which are operated by electric motors housed inside the mirror.

Such equipment, besides being bulky, is costly and of difficult implementation.

In FR—A—2 511 317 corresponding to the preamble of claim 1, there is described a cleaning device for external rear view mirrors of a motor vehicle consisting of a soft element which is fixed in a removable way to the mirror casing and which comprises at least one free ribbon apt to be brought against the mirror surface when the vehicle is in motion in such a way to clean and dry the minor surface owing to the flapping of the ribbon. This device can be easily damaged and therefore has a short life; the cleaning action performed by the device is not correct in particular in the zones near to the edges of the mirror casing and the free ribbons are not aesthetic and can be noisy when the vehicle is in motion. The object of the present invention is to obviate the aforesaid drawbacks by means of a simple device of rapid implementation.

Said object is attained by means of a cleaning system for external rearview mirrors of motor vehicles, whereby a plastics filament is retained and guided over the mirror reflecting surface by a resilient element, in such a manner that on pulling the ends of the filament its central part slides over the entire extent of said surface, the resilient element being supported by the casing containing the mirror.

The invention will be now disclosed by the description given hereinafter with reference to the accompanying drawing provided by way of nonlimiting example, and in which:

Figure 1 is an overall view of the device of the invention;

Figure 2 is a section through the device of Figure 1;

Figure 3 is a section on the line III—III of Figure 2, viewed from the rear.

A rearview mirror comprises a casing 1 in which is disposed a mirror 2 and which is fixed to the body 3 of a motor vehicle.

A plastics filament 5 comprises a central part resting on the reflecting surface of the mirror 2 and two lateral parts disposed in the way which will be hereinafter described.

The plastics filament 5 slides in suitable guides 8 fixed to the ends of a resilient element 6 which can be in the form of a spring comprising two lateral rectilinear arms and two central turns each of which is supported by a corresponding stake 7 of the casing 1.

Each of said tubular guides 8 is disposed sideways to an edge of the mirror 2, said edge being shaped substantially as an arc of circumference; a slide space 9, too shaped as an arc of circumference, is left between each edge of the mirror and the casing wall, and in said space a tubular guide 8 is compelled to slide.

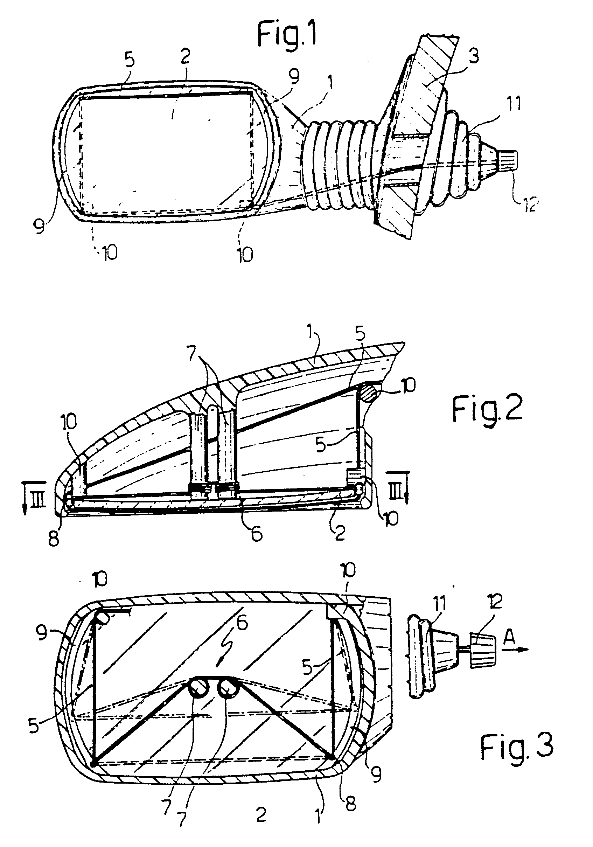

Further guides 10, suitably disposed and which form an integral part of the casing 1 as do the stakes 7, direct the two lateral parts of the filament 5 towards the end 11 of the frame which is located inside the passenger compartment and on which there is disposed a knob 12 to which said lateral parts are connected. On pulling the knob in the direction of the arrow A, the central part of filament 5, as shown by dashed lines in Figure 3, slides from the top downwards stretched over the mirror reflecting surface, in that the guides 8 connected to the ends of the resilient element 6 slide along the slide spaces 9. On releasing the knob 12, the force of the resilient element 6 returns the filament 5 to its initial position.

In this manner mirror cleaning is obtained by means of a simple low-cost system.

## Claims

1. Cleaning system for external rear-view mirrors of motor vehicles, in which the cleaning is performed by a deformable element acting on the reflecting surface of the mirror, characterised in that said deformable element consists of a plastics filament (5) retained and guided over the mirror reflecting surface (2) by a resilient element (6), in such a manner that on pulling the ends (12) of the filament its central part slides over the entire extent of said surface, the resilient element (6) being supported by the casing (1) containing the mirror.

2. Cleaning system as claimed in Claim 1, characterised in that said resilient element (6) comprises two lateral rectilinear arms and two central turns each of which is supported by a corresponding stake (7) of the casing (1) said plastic filament (5) sliding in two tubular guides (8) each of which is fixed to an end of one of said arms.

3. Cleaning system as claimed in Claim 1 or 2, characterised in that a sliding space (9) for each of said tubular guides (8) is provided between a lateral edge of the mirror and a wall of said casing, said tubular guides (8) being compelled to slide in said sliding space (9).

4. Cleaning system as claimed in one of the preceding claims, characterised in that said sliding space (9) is shaped substantially as an arc of circumference.

## Patentansprüche

1. Reinigungseinrichtung für außenliegende Rückblickspiegel von Motorfahrzeugen, bei welcher die Reinigung durch ein verformbares Element durchgeführt wird, welches auf der spiegelnden Oberfläche des Spiegels wirkt, dadurch gekennzeichnet, daß das verformbare Element aus einem Plastikfaden (5) besteht, welcher auf der spiegelnden Oberfläche (2) des Spiegels mittels eines federnden Elementes (6) derart geführt und gehalten wird, daß durch Ziehen der Enden (12) des Fadens sein mittlerer Teil über die gesamte Erstreckung der genannten Oberfläche gleitet, wobei das federnde Element (6) durch das Gehäuse (1) getragen wird, welches den Spiegel enthält.

2. Einrichtung nach Anspruch 1, dadurch gekennzeichnet, daß das federnde Element (6) zwei seitliche geradlinige Arme und zwei mittige Umlenkungen aufweist, von welchen jede durch einen korrespondierenden Stab (7) des Gehäuses (1) getragen wird, wobei der genannte Plastikfaden (5) in zwei rohrförmigen Führungen (8) gleitet, von welchen jede an ein Ende eines der genannten Arme angeschlossen ist.

3. Einrichtung nach den Ansprüchen 1 oder 2, dadurch gekennzeichnet, daß für jede der genannten rohrförmigen Führungen (8) zwischen einer seitlichen Kante des Spiegels und einer Wand des genannten Gehäuses ein Gleitraum (9) angeordnet ist, wobei die genannten rohrförmigen Führungen (8) gezwungen sind, in den genannten Gleiträumen (9) zu gleiten.

4. Einrichtung nach einem der vorangehenden Ansprüche, dadurch gekennzeichnet, daß der genannte Gleitraum (9) im wesentlichen als Kreisbogen geformt ist.

**Revendications**

1. Système de nettoyage pour des rétroviseurs extérieurs de véhicules à moteur, dans lequel le nettoyage est effectué par un élément déformable agissant sur la surface réfléchissante du miroir du rétroviseur, caractérisé en ce que cez élément déformable est un filament en plastique (5) retenu et guidé sur la surface réfléchissante du miroir (2) par un élément élastique (6) de telle manière que, lorsqu'on tire les extrémités (12) du filament, la partie centrale de ce dernier glisse sur la totalité de cette surface, l'élément élastique (6) étant supporté par le boitier (1) contenant le miroir.

2. Système de nettoyage selon la revendication 1, caractérisé en ce que cet élément élastique (6) comprend deux branches latérales rectilignes et deux spires centrales, dont chacune est supportée par une colonnette correspondante (7) du boîtier (1), ce filament plastique (5) coulissant dans deux guides tubulaires (8) dont chacun est fixé sur une extrémité de l'un des bras.

3. Système de nettoyage selon la revendication 1 ou la revendication 2, caractérisé en ce qu'un espace de coulissement (9) pour chacun des guides tubulaires (8) est ménagé entre le bord latéral du miroir et une paroi du boîtier, ces guides tubulaires (8) étant forcés de coulisser dans les espaces de coulissement (9).

4. Système de nettoyage selon l'une quelconque des revendications précédéntes, caractérisé en ce que chaque espace de coulissement (9) a pratiquement la forme d'un arc de cercle.

Fig.1

Fig.2

Fig.3